Europäisches Patentamt

European Patent Office

Office européen des brevets

(19)

(11) Numéro de publication: **0 013 221**
**B1**

(12) **FASCICULE DE BREVET EUROPEEN**

(45) Date de publication du fascicule du brevet: **12.01.83**

(51) Int. Cl.³: **H 01 Q 3/12, H 01 Q 3/26**

(21) Numéro de dépôt: **79401031.4**

(22) Date de dépôt: **18.12.79**

(54) Antenne à balayage pour radar, notamment radar de poursuite.

(30) Priorité: **22.12.78 FR 7836245**

(43) Date de publication de la demande:
**09.07.80 Bulletin 80/14**

(45) Mention de la délivrance du brevet:
**12.01.83 Bulletin 83/2**

(84) Etats contractants désignés:
**CH DE GB IT NL SE**

(56) Documents cités:
**FR - A - 1 261 908**
**FR - A - 2 261 628**
**US - A - 3 144 646**
**US - A - 3 710 388**

(73) Titulaire: **THOMSON-CSF**
**173, Boulevard Haussmann**
**F-75379 Paris Cedex 08 (FR)**

(72) Inventeur: **Drabowitch, Serge**
**"THOMSON-CSF" – SCPI 173, bld Haussmann**
**F-75360 Paris Cedex 08 (FR)**

(74) Mandataire: **Eisenbeth, Jacques Pierre et al,**
**THOMSON-CSF SCPI 173, Bld Haussmann**
**F-75379 Paris Cedex 08 (FR)**

Courier Press, Leamington Spa, England.

# 0013221

## Antenne à balayage pour radar, notamment radar de poursuite

La présente invention concerne une antenne à balayage pour radar notamment radar de poursuite.

Un radar de poursuite mesure les coordonnées d'une cible et fournit des données qui peuvent être utilisées pour déterminer la trajectoire de la cible et prédire sa position future. Pour établir cette prédiction, pratiquement toutes les données disponibles dans un radar peuvent être utilisées, la distance, l'angle de gisement, la fréquence Doppler; ceci fait que tout radar, a priori, peut être considéré comme un radar de poursuite à partir du moment où l'information de sortie qu'il délivre est traitée de façon adéquate. Toutefois un radar de poursuite se distingue des autres radars par la façon dont la poursuite angulaire de la cible est effectuée, et cette poursuite angulaire a pour but de définir une erreur indiquant le déport angulaire par rapport à l'axe de l'antenne de la direction dans laquelle se trouve la cible, ce signal d'erreur alimentant des servomécanismes prévus pour ramener l'axe de l'antenne sur la direction de la cible.

D'une façon générale, on considère trois méthodes devenues classiques pour produire ce siganl d'erreur.

Une première méthode est la détection d'une cible par basculement de diagramme (Sequential Lobing en anglais), une seconde mèthode est le balayage conique et une troisième méthode est la méthode monopulse.

L'antenne suivant l'invention relève en partie de la seconde méthode, dite du balayage conique dont le principe va être rappelé.

Dans un système à balayage conique, comportant un système réflecteur focalisant, l'antenne est éclairée par une source primaire dont le centre de phase décrit autour de l'axe focal du système un cercle de rayon déterminé situé dans le plan focal. Pour une telle antenne, le diagramme de rayonnement n'est plus centré sur l'axe du système focalisant, mais tourne dans l'espace de sorte que la direction de rayonnement maximal décrit un cone dont le demi-angle au sommet est appelé angle de strabisme de l'antenne (Squint angle en anglais).

En l'absence d'un système focalisant, le balayage conique peut être obtenu au moyen d'une source tournante, inclinée par rapport à son axe de révolution et dont le centre de phase est sur cet axe.

L'amplitude du signal délivré par l'antenne est ainsi modulée en amplitude à la fréquence de rotation du diagramme et le taux de modulation est fonction de l'angle de la cible par rapport à l'axe de rotation. Le signal de modulation extrait du signal d'echo est utilisé dans des servomécanismes pour asservir l'antenne en position sur la cible.

Du fait de la symétrie de révolution, les faisceaux rayonnés par l'antenne se recoupent tous suivant l'axe du système de révolution et en général, le niveau de recoupement est tel qu'il a une valeur optimale, compris entre la pente à l'origine qui donne la précision de pointage et la portée du radar.

Dans une antenne à balayage conique classique, le diagramme de rayonnement est le même à l'émission et à la réception fournissant la possibilité par analyse du diagramme à l'émission, de connaître la fréquence de rotation du diagramme, utilisable à des fins de brouillage.

Il est des applications où cette possibilité de détection de la fréquence de rotation du diagramme de rayonnement de l'antenne à balayage conique doit être supprimée.

Dans une solution de l'art antérieur, on a proposé d'émettre suivant un diagramme de rayonnement centré sur l'axe de l'antenne et de recevoir suivant un diagramme de rayonnement à balayage conique. Une réalisation faite sur ce principe comporte une source primaire du type monopulse délivrant des signaux dans une voie somme et dans deux voies différence, l'une en gisement, l'autre en site. La voie somme est combinée avec les voies différence et le diagramme en balayage conique est obtenu, à la réception, par un déphaseur variable tournant, faisant varier la phase entre les signaux différence et somme. Le diagramme de rayonnement obtenu est décentré et tourne à la vitesse du déphaseur. Cette réalisation définit un récepteur à un seul canal qui n'est toutefois pas à l'abri d'erreurs sur la détermination des angles, dues à des fluctuations de l'amplitude de l'écho. De plus, elle conduit à des réalisations relativement complexes et partant coûteuses.

Le brevet américain 3 710 388 donne une autre solution selon laquelle le centre de phase de l'antenne, déplacé par rapport à la ligne de visée, décrit un cercle centré sur la ligne de visée et situé dans un plan perpendiculaire à la ligne de visée. Une telle antenne est dite effectuant un balayage cylindrique.

Toutefois cette solution est d'une réalisation relativement compliquée et coûteuse exigeant l'entraînement en rotation, d'une assez grande amplitude, de l'antenne de réception complète qui, dans le cas général où elle présente un gain important, est de grande dimension et donc possède une grande inertie. De plus, cette solution n'apparaît pas transposable directement à une antenne comportant un réflecteur.

C'est le but de la présente invention de définir une antenne comportant un système focalisant et rayonnant des ondes dont le centre de phase décrit un cercle situé dans un plan perpendiculaire à la direction du rayonnement maximal.

Suivant l'invention, une antenne, notamment de radar, effectuant un balayage de l'espace suivant

2

**0013 221**

lequel le centre de phase des ondes rayonnées décrit un cercle situé dans un plan perpendiculaire à la direction du rayonnement maximal est caractérisée en ce que ce balayage est obtenu pour les ondes réfléchies par un système réflecteur focalisant illuminé par une source primaire à balayage conique dont le centre de phase coïncide avec le foyer du système focalisant.

La présente invention sera mieux comprise dans la description qui suit d'exemples de réalisation donnés à l'aide des figures qui représentent:

— la figure 1, un schéma montrant le mouvement circulaire du centre de phase des ondes rayonées dans le plane de l'ouverture rayonnante perpendiculaire à la direction de rayonnement maximum;

— la figure 2, une courbe donnant le dépointage en fonction du déphasage;

— les figures 3 et 4, une réalisation schématique d'une antenne à balayage suivant l'invention avec une source illuminant un système focalisant;

— la figure 5, une réalisation schématique d'une antenne à balayage suivant l'invention du type antenne Cassegrain et;

— la figure 6, un diagramme schématique de la chaîne de traitement des signaux délivrés par l'antenne à balayage selon l'invention.

Dans l'introduction à la présente invention, il a été rappelé que pour effectuer une poursuite, on utilise généralement le procédé dit du balayage conique qui utilise la modulation d'amplitude de l'écho radar pris dans le faisceau rayonné par l'antenne soumise à ce balayage pour en déduire les coordonnées angulaires de l'objectif par rapport à un référentiel lié à l'antenne. Il a été rappelé également qu'un détecteur de radar peut déterminer la fréquence du balayage, c'est-à-dire la fréquence de rotation du faisceau d'antenne émis et qu'il est alors possible de moduler en amplitude, à cette fréquence de balayage, brouilleur qui perturbera complètement la poursuite angulaire effectuée.

Suivant l'invention on définit des moyens qui ont pour but d'éliminer la modulation d'amplitude dans un balayage conique, le signal émis étant soumis à une modulation de phase, qui ne présente pas les inconvénients qui ont été signalés.

Pour ce faire l'antenne comporte des moyens tels que dans le balayage du faisceau rayonné dans l'espace à partir d'un système focalisant, le centre de phase C des surfaces d'onde émise se déplace suivant un cercle parallèle au plan de l'ouverture de l'antenne, le signal étant alors module en phase.

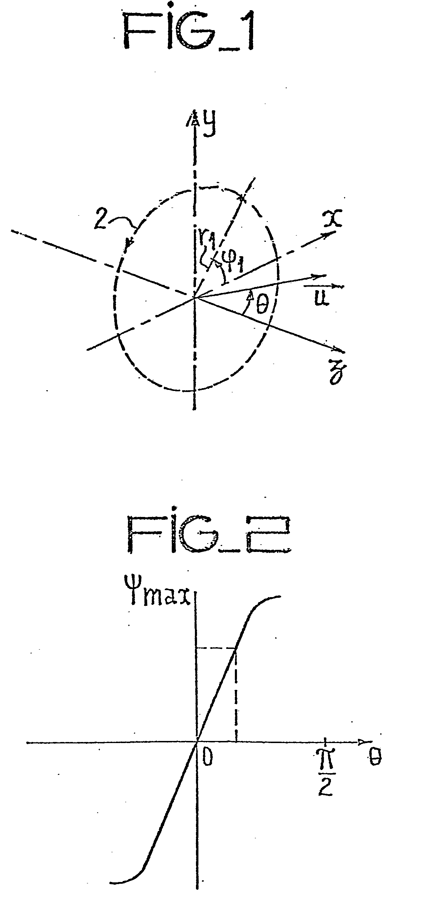

La figure 1 représente de façon schématique le mouvement circulaire (cercle 2) du centre de phase C des ondes rayonnées dans le plane de l'ouverture rayonnante perpendiculaire à la direction de rayonnement maximum.

Le centre de phase C est animé d'un mouvement circulaire autour de l'axe oz, d'un référentiel fixe oxzy.

Dans les conditions définies ci-dessus, le signal émis doit être modulé en phase. Un calcul simple permet de mettre en évidence cette propriété.

On repère le centre de phase C des ondes rayonnées, qui sera vu de façon plus nette sur les figures 3, 4 et 5, par ses coordonnées polaires $r1$, $\varphi1$ dans le systèmes d'axes orthogonaux oxyz, avec $\varphi1=2\pi Nt$, N étant la fréquence de rotation du centre. Une direction $\vec{u}$ de l'espace est repérée par ses coordonnées sphériques $\theta$ et $\varphi$.

Si $\vec{f_c}(\vec{u})$ uo $f_c(\theta, \varphi)$ représente le diagramme de l'antenne mesuré par rapport à son point de référence C, le diagramme repéré par rapport au point fixe 0 s'obtient, d'après le "théorème de translation" par la relation:

$$\vec{f_o}(\vec{u})=\vec{f_c}(\vec{u})e^{ik\overrightarrow{OC} \cdot \vec{u}} \tag{1}$$

relation dans laquelle $i=\sqrt{-1}$ et k est le nombre d'onde égal à $2\pi/\lambda$, $\lambda$ étant la longueur d'onde utilisée.

En explicitant le produit scalaire du terme exponentiel, on obtient:

$$\vec{f_o}(\vec{u})=\vec{f_o}(\theta,\varphi)=\vec{f_c}(\theta,\varphi)e^{ik\ r_1\ \sin\ \theta\ \cos\ (2\pi Nt-\varphi)} \tag{2}$$

Le diagramme émis dans les conditions définies plus haut est dépourvu de modulation d'amplitude, mais possède une modulation de phase.

Après réflexion sur un objectif situé dans une direction $\vec{u}(\theta,\varphi)$, on reçoit un signal représenté par un scalaire proportionnel au carré du diagramme, donc de la forme

$$s(t)=A[f_c(\theta,\varphi)]^2e^{i2k\ r_1\ \sin\ \theta\ \cos\ (2\pi Nt-\varphi)} \tag{3}$$

Dans le coefficient A intervient la surface équivalente d'écho de l'objectif ainsi que d'autres paramètres comme la distance, la longuer d'onde, l'effet Doppler, etc.

On obtient de la sorte un signal affecté d'une modulation de phase:

$$\psi(t)=\psi max\ \cos\ (2\pi Nt-\varphi) \tag{4}$$

et la profondeur de modulation est donnée par

**0013221**

$$\psi max = 2k\ r_1\ \sin\ \theta \tag{5}$$

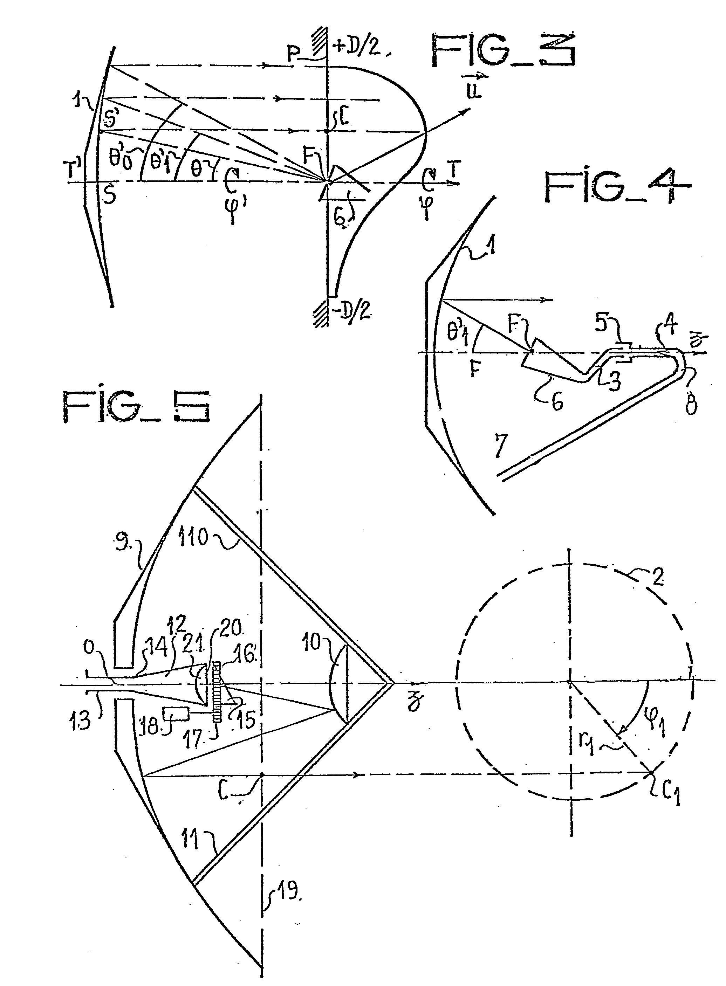

En considérant la courbe de discrimination en S de la figure 2, on constate que l'équation 5 donne la variation du taux de la modulation de phase en fonction du dépointage $\theta$ de la cible. La phase de la modulation de phase par rapport à la position du centre de phase C donne directement la seconde coordonnée $\varphi$. La pente d'écartométrie, pente de la courbe discrimination de la figure 2 est donnée par la partie principale de $\psi max$ de la formule (5)

$$\text{soit } p = 2Kr_1 = \frac{4\pi r_1}{\lambda} \tag{6}$$

Cette partie est proportionnelle au rayon du cercle de rotation mesuré en longeurs d'ondes; plus elle est élevée plus le système est sensible et par suite précis.

La figure 3 représente une réalisation schématique de l'invention dans laquelle, l'antenne comporte un système focalisant 1 d'axe T'T et de sommet S. Ce système focalisant peut être un réflecteur. Ce système est centré sur l'axe et possède un foyer F, qui est choisi coïncidant avec le centre le phase d'une source primaire 6. Cette source présente la particularité d'être inclinée sur l'axe ST de sorte que la direction de son rayonnement maximal FS' fait un angle $\theta_1'$ avec lui; on définit dans cette figure d'autres paramètres, soit $\theta_o'$ qui représente la demi-ouverture angulaire de l'antenne, D le diamètre utile, $\theta'$ et $\varphi'$ qui sont les coordonnées sphériques d'une direction primaire. On suppose que la source 6 rayonne suivant un diagramme primaire approximativement symétrique et équiphase $f(\theta',\varphi')$. A l'aide de cette figure on va démontrer que le balayage réalisé suivant l'invention est possible et que seule une modulation de phase du signal intervient.

On considère la loi d'illumination de l'ouverture équivalente dans le plan SFS' où l'angle $\varphi_1$ défini dans la figure 1 est variable, égal à $2\pi Nt$, N étant la fréquence de rotation et t le temps. Cette loi d'illumination est le produit du diagramme primaire de la source 6 par la fonction de transfert du système, M' étant un point de l'ouverture équivalente dans le plan P de coordonnées polaires $r,\varphi$; le champ en ce point est donné par:

$$E_x(M') = E_o Af(\theta',\varphi')T(r) \tag{7}$$

expression dans laquelle $E_o$ et A sont des coefficients constants.

Si la fonction de transfert T est identique à 1, on a

$$r = 2F_f\ \sin\frac{\theta'}{2} \simeq F_f\theta' \tag{8}$$

et

$$E_x(r,\varphi') \simeq E_o AF_f(\frac{r}{F_f},\varphi') \tag{9}$$

expression dans laquelle $F_f$ est la longeur focale du système focalisant.

On obtient une illumination symétrique et équiphase centrée autour du point $C_1$ de l'ouverture, de coordonées

$$r_1 = 2F_f\ \sin\frac{\theta_1'}{2} - F_f\theta'1$$

$$\varphi_1 = 2\pi Nt \tag{10}$$

Ce point $C_1$ est le centre de phase du diagramme secondaire, c'est-à-dire des ondes émises dans l'espace et on notera que suivant l'invention, ce centre de phase est animé d'un mouvement de rotation autour de l'axe.

Si l'on applique le théorème de translation (2), le diagramme à l'infini $\vec{F_1}(\vec{u})$ se déduit du diagramme correspondant $\vec{F_o}$ obtenu lorsque le point $C_1$ est au centre de coordonnée (F) en multipliant par le facteur de phase

$$e^{ik\vec{FC_1}} \cdot \vec{u} \text{ avec } k = \frac{2\pi}{\lambda}$$

nombre d'onde.

4

**0013 221**

En utilisant les coordonnées sphériques $\theta,\varphi$ de la direction du vecteur unitaire $\vec{u}$ on a

$$\vec{F_1}(\theta,\varphi)e^{ikF\theta'_1} \sin \theta \cos(2\pi NT{-}\varphi) \qquad (11)$$

Comme cela a été dit on a bien un signal modulé sinosoïdalement en phase et l'on voit que la profondeur de la modulation est de la forme

$$\psi max{=}p \sin \theta \qquad (12)$$

qui est identique à l'expression (6) précédemment établie.

Comme précédemment on voit que la poursuite angulaire est obtenue en démodulant un signal modulé en phase. L'amplitude p sin $\theta$ et la phase $\varphi$ de cette modulation donnent les coordonnées sphérique $\theta$ et $\varphi$ de l'objectif. On pourra noter que la modulation peut être importante en phase acquisition d'un objectif mais qu'elle est faible en phase poursuite.

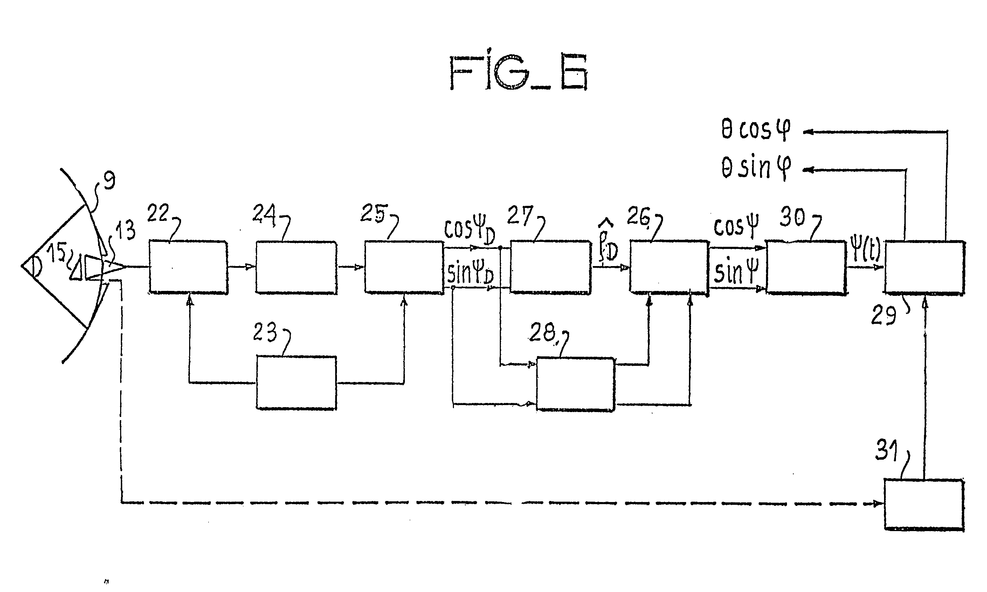

La figure 4 présente une réalisation d'une antenne suivant l'invention comportant un réflecteur, comme dans la figure schématique 3.

Le réflecteur 1, par exemple parabolique, a son foyer F sur l'axe oz qui coïncide avec le centre de phase d'une source primaire 6 schématisée sous la forme d'un cornet de Huyghens bimode ou corrugé. Ce cornet est incliné par rapport à l'axe, d'un angle $\theta'_1$ choisi. Il est entraîné en rotation autour du point F par un moteur électrique, non représenté sur la figure. L'alimentation de cette source se fait par l'intermédiaire d'un joint tournant 5 en guide circulaire, le cornet 6 étant prolongé par un guide circulaire coudé 3. Le joint tournant 5 est connecté à une transition 4 assurant le passage d'un guide à section circulaire à un guide à section rectangulaire 7 qui présente un coude 8. Le guide 7 est connecté à un générateur, non représenté sur la figure.

Le cornet 6 sera de préférence du type Huyghens corrugé ou bimode, ceci pouir éviter des modulations d'amplitude parasites.

La figure 5 représente une autre réalisation d'une antenne à balayage à modulation de phase conformément à l'invention.

L'antenne considérée est une antenne Cassegrain et pour éviter le joint tournant de la réalisation de la figure 4 et limiter l'importance et le poids de la partie mobile, on utilise une source primaire axiale fixe rayonnant à travers un prisme tournant, réalisé en un matériau diélectrique naturel ou artificiel.

Sur la figure le réflecteur principal est repéré par 9 et le réflecteur auxiliaire par 10.

Ces réflecteurs sont de révolution autour de l'axe oz. En 11 et 110 on a figuré des bras supports du réflecteur auxiliaire. Dans la partie centrale du réflecteur principal 9, on dispose une source primaire 12, dans la réalisation proposée un cornet corrugué circulaire, connecté à une alimentation non représentée sur la figure, par l'intermédiaire d'un guide d'alimentation 13 et d'une transition 14, guide lisse-cornet corrugué.

Devant l'embouchure du cornet est disposé un prisme 15 auquel est imparti un mouvement de rotation autour de l'axe oz. Le rôle de ce prisme est, la source primaire étant fixe, de faire tourner le centre de phase des ondes émises par le cornet dans un plan parallèle à l'ouverture de l'antenne pour créer le balayage conique à modulation de la phase. L'entraînement en rotation du prisme autour de l'axe oz peut être obtenu en disposant une couronne dentée 16 autour du prisme, engrenant dans une couronne 17 solidaire d'un moteur 18. On a tracé sur cette figure le trajet d'un rayon correspondant à la direction du maximum de rayonnement.

Le centre de phase des ondes émises par le système est C qui se déplace dans le plan de l'ouverture du système 19.

On notera que la mise en place d'un prisme devant l'embouchure du cornet risque de créer une modulation d'amplitude parasite en déplaçant le centre de phase de la source à l'extérieur de l'axe de rotation. Pour éviter cet inconvénient, on dispose dans l'ouverture 20 de la source primaire 12, une lentille de focalisation 21 qui remet en place le centre de phase sur l'axe oz.

On notera également que la source primaire peut aussi être un cornet multimode.

Il est possible d'établir, dans le système de balayage tel qu'il vient d'être décrit, une relation entre la pente et la perte de gain, due à l'excentrement de l'illumination par rapport à l'ouverture utile du système. Cette perte de gain est proportionnelle au carré du dépointage primaire $\theta'_1$. Cette perte peut être calculée. Le résultat de ce calcul indique que pour une pente d'écartométrie donnée, la perte de gain axial nécessaire est moins importante dans le balayage avec modulation de phase tel que décrit dans l'invention que dans le cas du balayage conique d'amplitude. En balayage de phase, le gain maximal est obtenu dans l'axe contrairement au balayage conique d'amplitude.

Ayant décrit des réalisations mettant en oeuvre les enseignements de l'invention, on va donner dans ce qui suit à l'aide de la figure 6 une description du traitement du signal délivré par l'antenne aux fins de déterminer le dépointage de la cible par rapport à l'antenne, par ses coordonnées sphériques par exemple.

En partant d'une des relations (4) ou (11), on constate que l'antenne, compte tenu de l'effet Doppler, est affectée d'un facteur de phase $\psi_D$ ayant l'expression suivante:

5

## 0 013 221

$$\psi_D(t)=2\pi f_D t+\psi(t)=2\pi f_D t+\psi_o+p \sin \theta \cos (2\pi NT-\varphi)$$

où

$\theta$ et $\psi$ sont les deux coordonnées sphériques cherchées

N est la fréquence du balayage

p est la pente d'écartométrie

$\psi_o$ est une phase origine non connue

$f_D$ est la fréquence Doppler de la cible

$\psi_D$ contient un terme utile d'amplitude $p \sin \theta$ et un terme parasite $2\pi f_D t$ pour la mesure d'écartométrie, fonction de la fréquence Doppler et d'amplitude très importante.

Le traitement consiste alors à élaborer une valeur estimée de $f_D$ et à soustraire la phase $2\pi f_D t$ à $\psi_D(t)$.

Le disposif de traitement représenté figure 6 comporte à partir de l'antenne 9 et du guide d'alimentation 13 de la source primaire 12, en prenant la réalisation de la figure 5 par exemple, un mélangeur 22 connecté d'une part à un oscillateur local stabilisé 23 et d'autre part à un amplificateur à fréquence intermédiaire 24. Celui-ci est connecté à un démodulateur cohérent 25 connecté à l'oscillateur local stabilisé 23. Les deux sorties du démodulateur cohérent sont connectées à un circuit multiplicateur 26 d'une part à travers un circuit 27 dit d'estimation de la fréquence Doppler $f_D$ et d'autre part à travers un circuit à retard 28.

Un circuit de démodulation du balayage 29 qui délivre les coordonnées sphériques d'une cible est connecté au multiplicateur 26 avec un circuit de calcul 30 d'arc tangente et à un circuit 31 donnant une référence de balayage. Ce circuit de référence est connecté au prisme tournant 21.

L'élaboration de la valeur estimée de la fréquence Doppler $f_D$ est faite par une démodulation cohérente (ou un produit) dans le circuit 27 utilisant en référence une fonction trigonométrique de la valeur estimé $f_D$ de la fréquence Doppler $f_D$ et un signal de composantes $\cos \psi_D$ et $\sin \psi_D$ délivrées par un circuit de démodulation 25.

Un retard 28 peut être inséré dans cette voie pour tenir compte du temps de réponse de l'estimateur.

Les sorties du multiplicateur 26 donnent $\cos \psi(t)$ et $\sin \psi(t)$ avec $\psi(t)=p \sin \theta \cos (2\pi NT-\varphi)$.

Le calcul d'arc tangente dans le circuit 30 permet alors de connaître l'angle $\psi(t)$, dont l'indétermination à $2\pi$ près est sans inconvénient, puisque $|p \sin \theta|$ reste inférieur à $\pi$.

Le produit de $\psi(t)$ par la référence de la modulation du balayage issue du circuit 31 donne deux signaux proportionnels à:

$$\theta \cos \varphi \text{ et } \theta \sin \varphi$$

qui sont représentatifs des écarts angulaires en site et en gisement de l'objectif poursuivi.

On a ainsi décrit une antenne à balayage à modulation de la phase pour radar, et notamment radar de poursuite.

## Revendications

1. Antenne radar effectuant un balayage de l'espace suivant lequel le centre de phase (C) des ondes rayonnées décrit un cercle (2) situé dans un plan (P) perpendiculaire à la direction du rayonnement maximal, déterminant ainsi une modulation de la phase desdites ondes, caractérisée en ce que le balayage est obtenu par un système réflecteur focalisant (1, 9) illuminé par une source primaire (6) à balayage conique dont le centre de phase coïncide avec le foyer (F) du système focalisant.

2. Antenne suivant la revendication 1, caractérisée en ce que la source primaire (6) dont le centre de phase coïncide avec le foyer (F) du système focalisant (1), est inclinée d'un angle déterminé par rapport à l'axe (TT'-Sz) du système et qu'elle comporte des moyens l'entraînant en rotation autour de cet axe.

3. Antenne suivant la revendication 2, caractérisée en ce que la source (6) est connectée à un guide (3), coudé, débouchant dans un joint tournant (5) d'axe confondu avec l'axe du système (figure 4).

4. Antenne suivant la revendication 1, caractérisée en ce qu'elle est du type Cassegrain, son système focalisant comportant un réflecteur principal (9) et un réflecteur auxiliaire (10), la source primaire a balayage conique étant constituée par une source primaire fixe (12), disposée axialement dans le réflecteur principal (9) et un prisme (15) disposé dans l'ouverture (20) de la source (12) et animé d'un mouvement de rotation autour de l'axe (oz) du système.

5. Antenne suivant la revendication 4, caractérisée en ce que le prisme (15) comporte une couronne d'entraînement (16), engrenant dans une couronne (17) solidaire d'un moteur (18).

6. Antenne suivant l'une des revendications 4 ou 5, caractérisée en ce que l'on dispose dans l'ouverture (20) de la source (12) une lentille (21) de correction du centre de phase.

7. Antenne suivant la revendication 4, caractérisée en ce que la source primaire (12) est un cornet corrugué circulaire.

6

8. Antenne suivant l'une des revendications 1 à 7, caractérisé en ce que le facteur de phase du signal modulé en phase délivré par l'antenne étant de la forme

$$\psi_D(T) = 2\pi f_D t + \varphi(t) = 2\pi f_D t + \psi_0 + p \sin \theta \cos (2\pi Nt - \varphi)$$

expression dans laquelle, $\theta$ et $\psi$ sont les coordonnées sphériques d'un objectif, N la fréquence du balayage, p la pente d'écartométrie, $\psi_0$ une phase origine et $f_D$ la fréquence Doppler de l'objectif, le système de traitement du signal comprend à partir de la source (6, 13) un mélangeur (22) connecté à un oscillateur stabilisé (23), suivi d'un amplificateur à fréquence intermédiaire (24) et d'un démodulateur cohérent (25) connecté à l'oscillateur stabilisé (23), les sorties du démodulateur cohérent (25) alimentant un circuit multiplicateur (26) d'une part à travers un circuit dit d'estimation de la fréquence Doppler $f_D$ (27) et d'autre part à travers un circuit à retard (28), les sorties du circuit multiplicateur (26) étant connectées à travers un circuit de calcul (30) d'arc tangente à un circuit de démodulation de balayage (29) connecté à un circuit (31) donnant une référence de balayage, les sorties du circuit de démodulation du balayage (29) délivrant les coordonnées de l'objectif ($\theta \cos \varphi$, $\theta \sin \varphi$).

9. Utilisation d'une antenne suivant l'une quelconque des revendications 1 à 8, dans un radar de poursuite.

**Patentansprüche**

1. Radarantenne, die eine Abtastung des Raumes durchführt, bei der das Phasenzentrum (C) der abgestrahlten Wellen einen Kreis (2) beschreibt, der in einer Ebene (P) liegt, die senkrecht zur Richtung de maximalen Abstrahlung ist, indem auf diese Weise eine Phasenmodulation der Wellen bestimmt wird, dadruch gekennzeichnet, daß die Abtastung durch ein fokussierendes Reflektorsystem (1, 9) erhalten wird, das von einer Primärquelle (6) mit konischer Ablenkung angestrahlt wird, deren Phasenzentrum mit dem Brennpunkt (F) des fokussierenden Systems zusammenfällt.

2. Antenne nach Anspruch 1, dadurch gekennzeichnet, daß die Primärquelle (6), deren Phasenzentrum mit dem Brennpunkt (F) des fokussierenden Systems (1) zusammenfällt, um einen bestimmten Winkel gegen die Achse (TT'-Sz) des Systems geneigt ist und Mittel aufweist, die sie um diese Achse herum in Drehung versetzen.

3. Antenne nach Anspruch 2, dadurch gekennzeichnet, daß die Quelle (6) an einen gebogenen Wellenleiter (3) angeschlossen ist, der in einer Drehverbindung (5) mündet, deren Achse mit der Systemachse zusammenfällt (Fig. 4).

4. Antenne nach Anspruch 1, dadurch gekennzeichnet, daß sie vom Cassegrain-Typ ist und ihr fokussierendes System einen Hauptreflektor (9) und einen Hilfsreflektor (10) aufweist wobei die Primärquelle mit konischer Ablenkung durch eine feststehende, axial in dem Hauptreflektor (9) angeordnete Primärquelle (12) und ein Prisma (15) gebildet ist, das in der Öffnung (20) de Quelle (12) angeordnet und mit einer Drehbewegung um die Achse (oz) des Systems angetrieben ist.

5. Antenne nach Anspruch 4, dadurch gekennzeichnet, daß das Prisma (15) einen Antriebskranz (16) Umfaßt, der mit einem Kranz (17) in Eingriff ist, der mit einem Motor (18) fest verbunden ist.

6. Antenne nach einem der Ansprüche 4 und 5, dadurch gekennzeichnet, daß in der Öffnung (20) der Quelle (12) eine Linse (21) zur Korrektur des Phasenzentrums angeordnet ist.

7. Antenne nach Anspruch 4, dadurch gekennzeichnet, daß die Primärquelle (12) ein kreisförmiges Wellblechhorn ist.

8. Antenne nach einem der Ansprüche 1 bis 7, dadurch gekennzeichnet, daß der Phasenfaktor des von der Antenne abgegebenen phasenmodulierten Signals die Form

$$\Phi_D(T) = 2\pi f_D t + \Phi(t) = 2\pi f_D t + \Phi_0 + p \sin \Theta \cos (2TNt - \Phi)$$

aufweist, wobei in diesem Ausdruck $\Theta$ und $\Phi$ die Kugelkoordinaten eines Zielobjektes, N die Ablenkfrequenz, p die Steigung für die Ablagemessung, $\Phi_0$ eine Ursprungsphase und $f_D$ die Dopplerfrequenz des Zielobjektes sind, und das Signalverarbeitungssystem ausgehend von der Quelle (6, 13) einen mit einem stabilisierten Oszillator (23) verbundenen Mischer (22) umfaßt, auf den ein Zwischenfrequenzverstärker (24) und ein mit dem stabilisierten Oszillator (23) verbundener Kohärent-Demodulator (25) folgen, wobei die Ausgänge des Kohärent-Demodulators (25) eine Multiplizierschaltung (26) einerseits über eine sogenannte Schätzschaltung (27) zur Schätzung der Dopplerfrequenz $f_D$ und andererseits über eine Verzögerungsschaltung (28) speisen, die Ausgänge der Multiplizierschaltung (26) über eine Rechenschaltung (30) zur Berechnung des Arkustangens mit einer Ablenk-Demodulationsschaltung (29) verbunden sind, welche mit einer Schaltung (31) verbunden ist, die eine Ablenkreferenz abgibt, und wobei die Ausgänge de Ablenk-Demodulationsschaltung (29) die Koordinaten ($\Theta \cos \Phi$, $\Theta \sin \Phi$) des Zielobjektes abgeben.

9. Verwendung einer Antenne nach einem der Ansprüche 1 bis 8 in einem Verfolgungsradar.

**0013221**

## Claims

1. Radar antenna performing a space scan in which the phase center (C) of the radiated waves described a circle (2) lying in a plane (P) which is perpendicular to the direction of maximum radiation, thus determining a phase modulation of said waves, characterized in that the scan is obtained by a focusing reflector system (1, 9) irradiated by a conical scan primary source (6) the phase center of which is coincident with the focus (F) of the focusing system.

2. Antenna in accordance with claim 1, characterized in that the primary source (6) the phase center of which is coincident with the focus (F) of the focusing system (1) is inclined by a determined angle with respect to the axis (TT'-Sz) of the system and comprises means for being rotationally driven about this axis.

3. Antenna in accordance with claim 2, characterized in that the source (6) is connected to a bent guide (3) opening into a rotary joint (5) the axis of which is coincident with the system axis (Fig. 4).

4. Antenna in accordance with claim 1, characterized in that it is of Cassegrain type, its focusing system comprising a main reflector (9) and an auxiliary reflector (10), the conical scan primary source being formed by a fixed primary source (12) axially placed within the main reflector (9) and a prism (15) located in the opening (20) of the source (12) and rotationally moved about the axis (oz) of the system.

5. Antenna in accordance with claim 4, characterized in that the prism (15) comprises a driving ring (16) engaging into a ring (17) mounted on a motor (18).

6. Antenna in accordance with any of claims 4 and 5, characterized in that a phase center correction lens (21) is arranged in the opening (20) of the source (12).

7. Antenna in accordance with claim 4, characterized in that the primary source (12) is a circular corrugated horn.

8. Antenna in accordance with any claims 1 to 7, characterized in that, the phase factor of the phase modulated signal supplied by the antenna being of the form

$$\Phi_D(T) = 2\pi f_D t + \Phi(t) = 2\pi f_D t + \Phi_o + p \sin\theta \cos(2TNt - \Phi)$$

in which $\theta$ and $\Phi$ are the spherical coordinates of an object, N is the scan frequency, p is the bearing slope, $\Phi_o$ is the original phase and $f_D$ is the Doppler frequency of the object, the signal processing system comprising, from the source (6, 13), a mixer (22) connected to a stabilized oscillator (23) followed by an intermediate frequency amplifier (24) and a coherent demodulator (25) connected to the stabilized oscillator (23), the outputs of the coherent demodulator (25) feeding a multiplication circuit (26) through a circuit termed as a Doppler frequency $f_D$ estimation circuit (27) on the one hand and through a delay circuit (28) on the other hand, the output of the multiplication circuit (26) being connected, through a circuit (30) for the calculation of the arc tangent, to a scanning demodulation circuit (29) connected to a circuit (31) supplying a scanning reference, the outputs of the scanning demodulation circuit (29) supplying the coordinates ($\Theta \cos\Phi$, $\Theta \sin\Phi$) of the object.

9. Use of an antenna in accordance with any of claims 1 to 8 in a tracking radar.

8

0013221

# FIG_1

# FIG_2

FIG_3

FIG_4

FIG_5

# FIG_6

θ cos φ

θ sin φ

0013 221